# EUROPÄISCHE PATENTSCHRIFT

(11) **EP 1 154 241 B1**
(45) Veröffentlichungstag und Bekanntmachung des Hinweises auf die Patenterteilung: **14.06.2006**
(21) Anmeldenummer: 01110410.6
(22) Anmeldetag: 27.04.2001
(51) Int. Cl.: G01D 5/347, G01B 7/30

(54) **Winkelmesseinrichtung**
Angle measuring device
Dispositif de mesure d'angles

(30) Priorität: 10.05.2000 DE 10022555
(43) Veröffentlichungstag der Anmeldung: 14.11.2001
(73) Patentinhaber: Dr. Johannes Heidenhain GmbH, 83292 Traunreut (DE)
(72) Erfinder: Torr, Alan, Bromley, Kent. BR2 0ND (GB)

(56) Entgegenhaltungen:
- EP-A- 0 762 081
- DE-A- 19 629 585
- DE-C- 19 742 800
- DE-U- 8 915 109
- US-A- 5 981 940

## Beschreibung

Die Erfindung betrifft eine Winkelmesseinrichtung gemäß dem Oberbegriff des Anspruches 1.

Winkelmesseinrichtungen dieser Art dienen dazu, die Winkelstellung, die Winkelgeschwindigkeit oder sonstige winkelabhängige Werte eines drehbaren Objektes zu bestimmen und für die Zwecke der Anzeige, Steuerung einer Werkzeugmaschine, Regelung oder anderweitige Auswertung zur Verfügung zu stellen.

Um Fluchtungsfehler beim Ankoppeln des Rotors der Winkelmesseinrichtung an das drehbare Objekt sowie axiale und radiale Ausschläge des drehbaren Objektes auszugleichen, ist zwischen dem Stator der Winkelmesseinrichtung und dem stationären Objekt eine Kupplung angeordnet, welche den Stator der Winkelmesseinrichtung verdrehsteif jedoch axial und/oder radial elastisch mit dem stationären Objekt verbindet.

Derartige Winkelmesseinrichtungen sind beispielsweise aus der DE 196 17 585 C1 und der DE 195 21 845 C2 bekannt. Nachteilig bei diesen Winkelmesseinrichtungen ist, dass die Ankopplung des Stators der Winkelmesseinrichtung an dem dem Rotor entgegengesetzten Ende der Winkelmesseinrichtung erfolgt. Dadurch läßt sich die Kupplung zwar sehr gut von außen zugänglich mit dem stationären Objekt verbinden, aber durch den großen axialen Abstand zwischen der Ankopplung des Rotors und der Ankopplung des Stators ist die Verdrehsteifigkeit nicht optimal.

Bei der Winkelmesseinrichtung gemäß der DE 196 29 585 A1 wurde erkannt, dass es vorteilhaft ist, die Kupplung zwischen dem Stator und dem stationären Objekt im Bereich der Lagerung des Rotors, also in der Nähe der Ankopplung des Rotors anzuordnen. Der zur Verfügung stehende Anbauraum in diesem Bereich ist sehr begrenzt, so dass es in der Praxis Probleme bereiten kann, die Vorrichtung zum radialen Klemmen der Kupplung zu erreichen und zu betätigen.

Bei der Winkelmesseinrichtung gemäß der DE 89 15 109 U1 und der US 5,981,940 A ist die Kupplung durch mehrere axial bzw. radial einschraubbare Schrauben an den Stator und an das stationäre Objekt durch Klemmen befestigt. Dabei befinden sich die Schrauben in einem schwer zugänglichen Raum zwischen der Winkelmesseinrichtung und dem stationären Objekt.

Die DE 197 42 800 C1 beschreibt eine Winkelmesseinrichtung mit einer zwischen mehreren Gehäuseteilen axial eingeklemmten Kupplung.

Der Erfindung liegt die Aufgabe zugrunde, eine Winkelmesseinrichtung anzugeben, bei der die Kupplung platzsparend geklemmt werden kann.

Diese Aufgabe wird durch eine Winkelmesseinrichtung mit den Merkmalen des Anspruches 1 gelöst.

Weiterhin betrifft die Erfindung ein Verfahren zur Montage eines Stators mit einem um eine Drehachse drehenden Rotor einer Winkelmesseinrichtung an ein stationäres Objekt.

Der Erfindung liegt deshalb die weitere Aufgabe zugrunde, ein Verfahren zur Montage eines Stators einer Winkelmesseinrichtung an ein stationäres Objekt anzugeben, bei dem möglichst wenige Montageschritte erforderlich sind, und das auch in einem beengten Anbauraum durchgeführt werden kann.

Diese Aufgabe wird durch die Merkmale des Anspruches 10 gelöst.

Die mit der Erfindung erzielten Vorteile bestehen insbesondere darin, dass die Kupplung in der Nähe der Lagerung des Rotors der Winkelmesseinrichtung angebaut werden kann, und dass trotzdem die Kupplung unter beengten Einbauverhältnissen stabil und drehfest am stationären Objekt befestigt werden kann. Der Raum der Kupplung muss zur Klemmung mit dem stationären Objekt von außen nicht zugänglich sein. Es ist eine stabile und platzsparende Montage möglich.

Vorteilhafte Ausbildungen der Erfindung entnimmt man den abhängigen Ansprüchen.

Ausführungsbeispiele der Erfindung sind in den Zeichnungen dargestellt.

Es zeigt:
- Figur 1: einen Querschnitt einer Winkelmesseinrichtung in einem Montageraum in einer ersten Montagestellung,
- Figur 2: die Winkelmesseinrichtung gemäß Figur 1 in einer zweiten Montagestellung,
- Figur 3: die Winkelmesseinrichtung gemäß Figur 1 im angebauten Zustand,
- Figur 4: die Kupplung der Winkelmesseinrichtung gemäß den Figuren 1 bis 3,
- Figur 5: ein zweites Ausführungsbeispiel einer Winkelmesseinrichtung mit einer Kupplung,
- Figur 6: die Kupplung gemäß Figur 5,
- Figur 7: ein drittes Ausführungsbeispiel einer Winkelmesseinrichtung mit einer Kupplung,
- Figur 8: die Kupplung gemäß Figur 7,
- Figur 9: ein viertes Ausführungsbeispiel einer Winkelmesseinrichtung mit einer Kupplung,
- Figur 10: die Kupplung gemäß Figur 9 und
- Figur 11: ein fünftes Ausführungsbeispiel einer Kupplung.

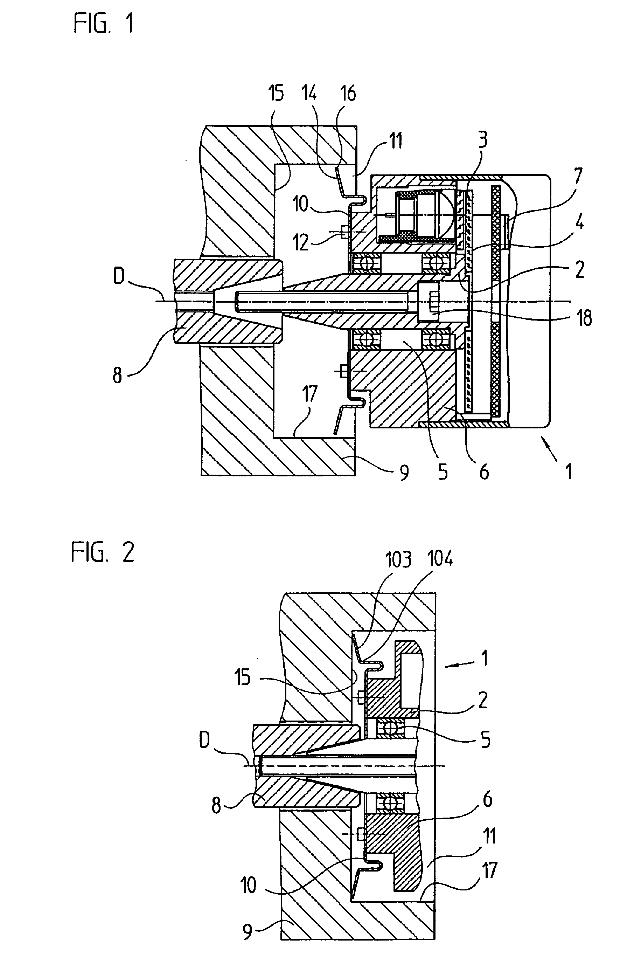

Ein erstes Ausführungsbeispiel der Erfindung ist in den Figuren 1 bis 4 dargestellt. Die Winkelmesseinrichtung 1 besteht aus einem Rotor 2, an welchem eine Teilscheibe 3 mit einer Maßverkörperung 4 angebracht ist. Der Rotor 2 ist über eine Lagerung 5 im Stator 6 der Winkelmesseinrichtung 1 um die Drehachse D drehbar gelagert. Die Winkellage des Rotors 2 relativ zum Stator 6 wird gemessen, indem die Maßverkörperung 4 in bekannter Weise von einer am Stator 6 angebrachten Abtasteinheit 7 abgetastet wird. Die Maßverkörperung 4 kann dabei ein optisch magnetisch, kapazitiv oder induktiv abtastbares Muster in Form einer inkrementalen oder codierten Teilung sein.

Zur Messung der Winkellage eines um die Drehachse D drehbaren Objektes 8 gegenüber einem stationären Objekt 9 ist der Rotor 2 drehstarr mit dem drehbaren Objekt 8 zu verbinden. Ebenso ist der Stator 6 mit dem stationären Objekt 9 verdrehsteif zu verbinden. Im gezeigten Beispiel ist das drehbare Objekt die Welle 8 eines Elektromotors und das stationäre Objekt das Motorgehäuse 9.

Um Fluchtungsfehler zwischen dem Rotor 2 und der Welle 8 auszugleichen sowie Taumelbewegungen sowie axiale Verlagerungen der Welle 8 zu kompensieren wird der Stator 6 über eine verdrehsteife, jedoch radial und/oder axial elastisch ausgleichende Kupplung 10 am Motorgehäuse 9 montiert. Die Kupplung 10 ist vorteilhafterweise am Stator 6 im Bereich der Lagerung 5 des Rotors und somit am rotorseitigen Ende der Winkelmesseinrichtung befestigt.

Bevor die Winkelmesseinrichtung 1 in den Montageraum 11, welcher vom Motorhäuse 9 gebildet wird, eingebracht wird, wird die Kupplung 10 mit einem Ende starr am Stator 6 der Winkelmesseinrichtung 1 befestigt. Dies kann durch Schrauben 12 erfolgen, welche in Bohrungen 13 der Kupplung 10 eingreifen. Die Befestigung kann auch durch Nieten, Kleben oder Schweißen erfolgen.

Die Winkelmesseinrichtung 1 wird danach mit der Kupplung 10 in den Montageraum 11 eingeschoben und axial an das Motorgehäuse 9 herangeführt. Diese erste Montagestellung ist in Figur 1 dargestellt.

Bei diesem axialen Heranführen stößt die Kupplung 10 mit einer axial wirkenden Anschlagfläche 14 an eine quer zur Drehachse D verlaufende Anschlagfläche 15 des Motorgehäuses 9. Diese zweite Montagestellung ist in Figur 2 dargestellt.

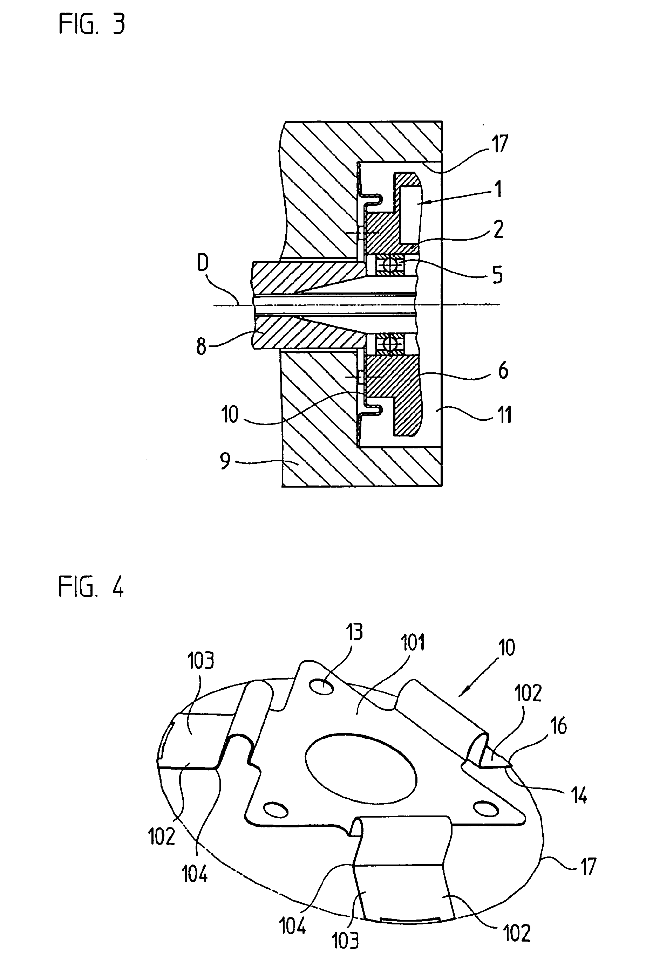

Wird die Winkelmesseinrichtung 1 mit der Kupplung 10 weiter axial herangeführt, stützt sich die Anschlagfläche 14 der Kupplung 10 an der axial wirkenden Anschlagfläche 15 des Motorgehäuses 9 ab und gleitet in radialer Richtung bis eine weitere Anschlagfläche 16 der Kupplung 10 an einer Umfangsfläche 17 des Motorgehäuses 9 anstößt, an der die Kupplung 10 selbsttätig radial verdrehsteif klemmt, indem sie sich radial an der Umfangsfläche 17 verspreizt. Die zur radialen Klemmung erforderliche Klemmkraft wird durch Zusammenwirken der beiden Anschlagflächen 14 und 15 eingeleitet, indem eine auf die Kupplung 10 wirkende axiale Andrückkraft in eine radial wirkende Klemmkraft umgewandelt wird. Zur Einleitung und Aufrechterhaltung der axialen Andrückkraft ist eine axiale Schraube 18 vorgesehen, welche den Rotor 2 mit der Welle 8 drehstarr verbindet. Die Schraube 18 ist axial von der zugänglichen Rückseite der Winkelmesseinrichtung 1 durch eine Bohrung des Rotors 2 hindurchgeführt und in die Welle 8 des Motors eingeschraubt und stützt sich mit dem Schraubenkopf axial am Rotor 2 ab und drückt somit das konische Ende des Rotors 2 in den Konus der Welle 8. Die Winkelmesseinrichtung 1 im montierten Zustand ist in Figur 3 dargestellt.

In Figur 4 ist die Kupplung 10 in perspektivischer Ansicht dargestellt. Die kreisringförmige Umfangsfläche 17 (rohrförmiger Tubus), an der sich die Kupplung 10 radial verspreizt ist nur schematisch als Ring dargestellt. Die Kupplung 10 ist vorteilhafterweise einstückig aus Federblech hergestellt (Stanz-Biegeteil) und besteht aus einer Basis 101, welche die Bohrungen 13 zum Befestigen am Stator 6 aufweist. An diese Basis 101 sind mehrere - beispielsweise drei - Laschen 102 angeformt, welche die Anschlagflächen 14 und 16 besitzen. Die Laschen 102 sind zwischen der Basis 101 und den Anschlagflächen 14 derart wellenförmig gebogen, dass zwischen der Basis 101 und den Anschlagflächen 14 eine axiale und radiale Ausgleichsbewegung ermöglicht wird. Weiterhin sind die Laschen derart gebogen, dass die axiale Kraft, welche über den Stator 6 auf die Basis 101 und weiter auf die Laschen 102 ausgeübt wird im Zusammenwirken mit der Anschlagfläche 15 in eine radiale Kraft umgewandelt wird. Verläuft die Anschlagfläche 15 wie dargestellt senkrecht zur Drehachse D, und soll eine radial nach außen wirkende Klemmkraft zur Befestigung der Kupplung 10 am Motorgehäuse 9 dienen, muss jede Lasche 102 einen nach außen weisenden schrägen Abschnitt 103 aufweisen, der über ein Gelenk 104 mit dem übrigen Bereich der Kupplung 10 verbunden ist.

Soll eine radial nach innen wirkende Klemmkraft zur Befestigung der Kupplung 10 am Motorgehäuse 9 dienen, muss jede Lasche 102 einen nach innen weisenden schrägen Abschnitt aufweisen. Zur Umleitung der axialen Kraft ist es auch möglich, dass die Anschlagfläche 15 schräg ausgebildet ist, also abweichend von 90° zur Drehachse D geneigt ist.

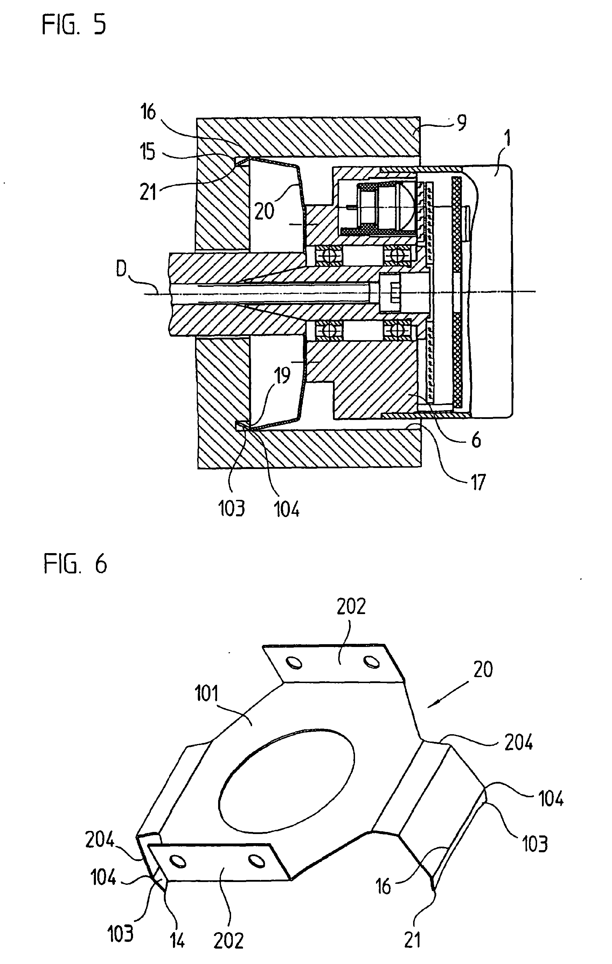

In den Figuren 5 und 6 ist eine weitere Winkelmesseinrichtung mit einer Kupplung 20 zur Befestigung des Stators 6 am Motorgehäuse 9 gezeigt. Die Kupplung 20 ist entsprechend der DE 89 15 109.7 ausgebildet und besteht aus einer Basis 101 mit zwei rechtwinkelig umgebogenen, zueinander parallel verlaufenden Laschen 202, welche an den Stator 6 angeschraubt sind. An der Basis 101 sind zwei weitere zumindest weitgehend parallel zueinander verlaufende Laschen 204 angeformt, wobei diese weiteren Laschen 204 weitgehend rechtwinkelig zur Basis 101 verlaufen und auch rechtwinkelig zu den ersten Laschen 202. Die weiteren Laschen 204 sind zur verdrehsteifen Klemmung mit dem Motorgehäuse 9 ausgebildet. Auch diese Kupplung 20 ist vorteilhafterweise einstückig als Stanz-Biegeteil aus Federblech hergestellt. Die jeweils zueinander parallel verlaufenden Laschen 202 sowie 204 bilden eine Parallelführung in radialer Richtung.

Die Laschen 204 können an den Enden entsprechend den Laschen 102 ausgebildet sein und an der radialen Umfangsfläche 17 klemmen. Zur Verstärkung der Klemmung kann gemäß Figur 5 zusätzlich eine innere Umfangsfläche 19 am Motorgehäuse 9 vorgesehen sein, an der sich die Laschen 204 zusätzlich radial abstützen. Beim Heranführen der Kupplung 20 an die axial wirkende Anschlagfläche 15 des Motorgehäuses 9 wird der schräge Abschnitt 103 um das Gelenk 104 verschwenkt, wodurch eine innere Anschlagfläche 21 der Kupplung 20 mit der inneren Umfangsfläche 19 des Motorgehäuses 9 sowie einer äußeren Umfangsfläche 16 der Kupplung 20 mit einer äußeren Umfangsfläche 17 des Motorgehäuses 9 in Kontakt tritt und sich die Kupplung 20 mit den Enden der Laschen 204 zwischen den beiden Umfangsflächen 17 und 19 verdrehsteif verspreizt.

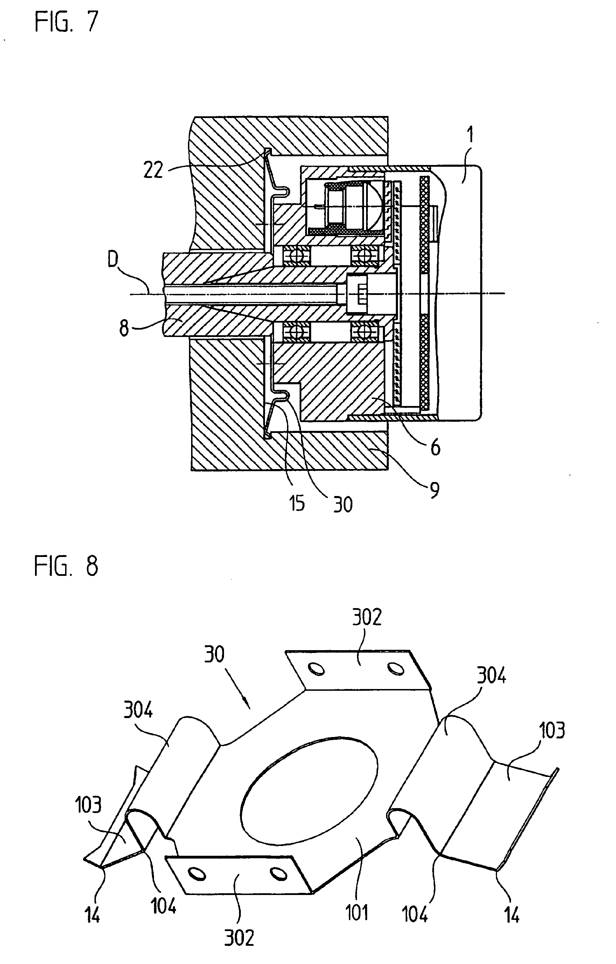

Ein drittes Ausführungsbeispiel ist in den Figuren 7 und 8 dargestellt. Die Kupplung 30 besteht wiederum aus einer Basis 101, an der zwei diametral gegenüberliegende parallel zueinander verlaufende Laschen 302 angeformt sind, welche an dem Stator 6 angeschraubt werden. Zu den ersten Laschen 302 um 90° versetzt angeordnet sind an die Basis 101 zwei weitere diametral gegenüberliegende Laschen 304 angeformt, welche zur drehstarren Klemmung am Motorgehäuse 9 ausgebildet sind. Nachdem die Anschlagfläche 14 der Kupplung 30 an der Anschlagfläche 15 des Motorgehäuses 9 anstößt bewirkt das Gelenk 104, dass der Abschnitt 103 sich radial nach außen verlagert und das gebogene Ende axial im Spalt 22 durch axiales Verspreizen drehstarr verklemmt, indem das umgebogene Ende auf der Anschlagfläche 15 abkippt.

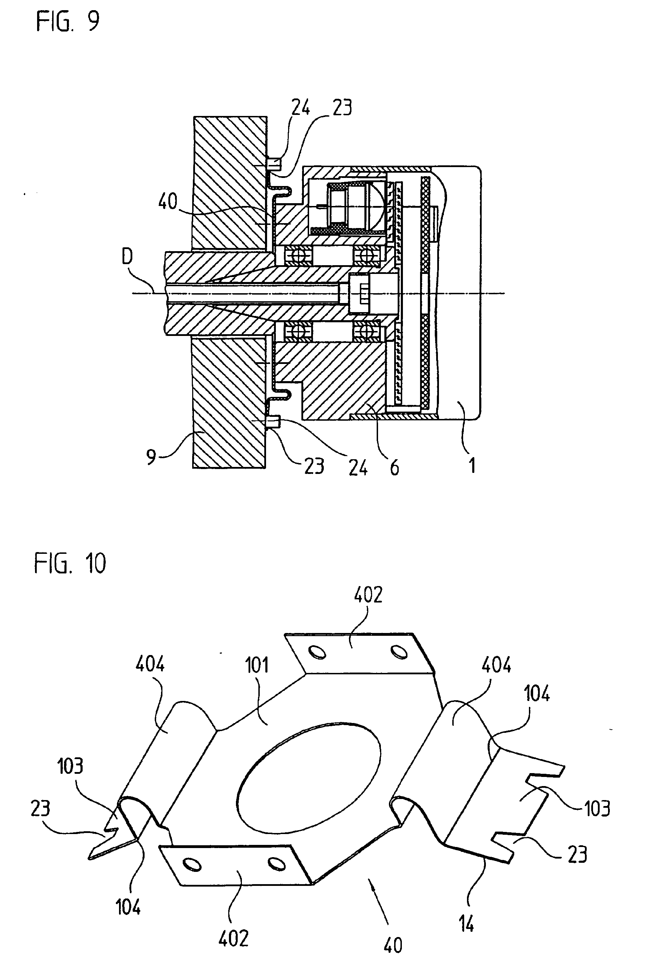

Ein viertes Beispiel einer Winkelmesseinrichtung 1 mit einer Kupplung 40 ist in Figur 9 und 10 dargestellt. Die Kupplung 40 entspricht der Ausführung gemäß Figur 7 und 8 mit dem Unterschied, dass die beiden Laschen 404 zusätzlich über einen Formschluss verdrehsteif mit dem Motorgehäuse 9 verbunden sind. Hierzu ist in jeder der Laschen 404 zumindest eine Ausnehmung 23 vorgesehen, in die ein Vorsprung in Form eines Stiftes 24 des Motorgehäuses eingreift. Die Laschen 404 stützten sich radial klemmend an den Stiften 24 ab. Die Ausnehmungen 23 sind radial nach innen sich verjüngend konisch geformt, so dass sich die Ränder der Ausnehmung 23 aufgrund der eingeleiteten Klemmkraft spielfrei an die Stifte 24 drängen.

Der Formschluss zwischen den Laschen 404 und dem Motorgehäuse 9 wirkt als stabile Verdrehsicherung. Anstelle der Stifte 24 können auch anders ausgebildete Erhöhungen am Motorgehäuse 9 mit den Laschen 404 eine formschlüssige Verdrehsicherung bilden. Der Formschluss kann auch durch Vertiefungen am Motorgehäuse 9 gebildet sein, in die Bereiche der Laschen 404 eingreifen.

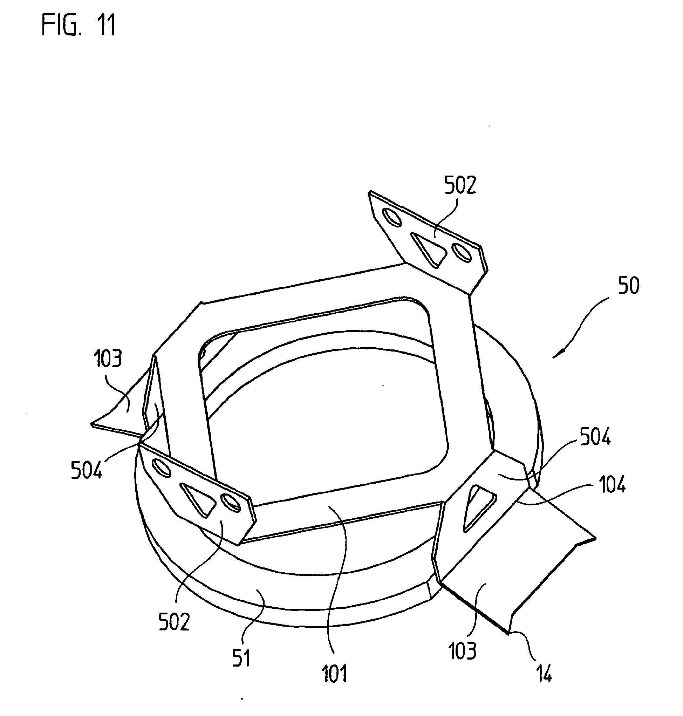

Ein fünftes Beispiel einer Winkelmesseinrichtung wird anhand der in Figur 11 schematisch dargestellten Kupplung 50 erläutert. Diese Kupplung 50 entspricht im Prinzip der Ausgestaltung gemäß den Figuren 5 und 6 mit dem Unterschied, dass die Basis 101 und die jeweils diametral gegenüberliegenden Laschen 502 und 504 fachwerkartig gemäß der EP 0 762 081 A1 ausgebildet sind. Weiterhin sind die zum radialen Ausgleich dienenden Laschen 504 von den zur Klemmung dienenden Abschnitten 103 durch einen stabilen Zwischenring 51 entkoppelt. Die zur radialen Klemmung der Kupplung 50 am Motorgehäuse 9 erforderlichen radialen Spreizkräfte wirken somit nur zwischen dem Motorgehäuse 9 und dem Zwischenring 51, so dass die Ausgleichskupplung 50 bezüglich radialer Klemmkräfte entlastet ist.

Die Laschen 102, 202, 302, 402, 502 sowie 204, 304, 404, 504 sind vorteilhafterweise radial auslenkbare Blattfederarme.

In allen Figuren sind gleichwirkende Teile mit den gleichen Bezugszeichen versehen. Erläuterungen eines dieser Teile zu einem Ausführungsbeispiel gelten auch für die anderen Ausführungsbeispiele.

Die selbsttätige Klemmung der Kupplung 10, 20, 30, 40, 50 am Motorgehäuse 9 kann bei allen Ausführungsbeispielen verstärkt werden, indem die Klemmflächen 16, 17, 19, 21 eine die Haftreibung erhöhende Oberfläche aufweisen, insbesondere eine aufgerauhte Oberfläche oder eine die Haftung erhöhende Beschichtung.

Die erläuterte Klemmung der Kupplung 10, 20, 30, 40, 50 kann alternativ oder zusätzlich auch zwischen der Kupplung und dem Stator der Winkelmesseinrichtung eingesetzt werden

## Patentansprüche

1. Winkelmesseinrichtung (1) zur Messung der Winkellage zwischen einem stationären Objekt (9) und einem hierzu um eine Drehachse (D) drehbaren Objekt, mit
- einem Rotor, (2) welcher verdrehsteif mit dem drehbaren Objekt (8) verbindbar ist,
- einem Stator (6) mit einer Abtasteinheit (7) zur Abtastung einer relativ zur Abtasteinheit (7) drehbaren Maßverkörperung (4),
- einer Kupplung (10, 20, 30, 40, 50) zur drehsteifen, jedoch radial und/oder axial elastischen Lagerung des Stators (6) an dem stationären Objekt (9), wobei die Kupplung (10, 20, 30, 40, 50) durch Klemmung am stationären Objekt (9) und/oder am Stator (6) befestigbar ist, wobei
- die Kupplung (10, 20, 30, 40, 50) quer zur Drehachse (D) verlaufende Anschlagflächen (14) aufweist, die mit ebenfalls quer zur Drehachse (D) verlaufenden Anschlagflächen (15) des stationären Objektes (9) und/oder des Stators (6) zusammenwirken, **dadurch gekennzeichnet, dass**
- die zur Klemmung erforderliche Klemmkraft durch Zusammenwirken der beiden Anschlagflächen (14, 15) eingeleitet wird, indem eine axiale Andruckkraft in eine radiale Klemmkraft umgewandelt wird, durch welche die Kupplung (10, 20, 30, 40, 50) mit dem stationären Objekt (9) und/oder dem Stator (6) radial verspreizbar ist.

2. Winkelmesseinrichtung nach Anspruch 1, **dadurch gekennzeichnet, dass** die Kupplung (10, 20, 40, 50) an einer Umfangsfläche (17) des stationären Objektes (9) klemmt.

3. Winkelmesseinrichtung nach Anspruch 2, **dadurch gekennzeichnet, dass** die Kupplung (20) einen Bereich (103) aufweist, der sich radial gegen eine innere Fläche (19) und eine äußere Fläche (17) des stationären Objekts (9) verspreizt.

4. Winkelmesseinrichtung nach Anspruch 1, **dadurch gekennzeichnet, dass** die Kupplung (30) einen Bereich aufweist, mit dem sie sich axial in einem Spalt (22) des stationären Objekts (9) verspreizt.

5. Winkelmesseinrichtung nach einem der vorhergehenden Ansprüche, **dadurch gekennzeichnet, dass** die Kupplung (10) eine Basis (101) aufweist, mit der sie am Stator (6) starr befestigt ist und an die Basis (101) mehrere Laschen (102) angeformt sind, mit denen sie am stationären Objekt (9) klemmt.

6. Winkelmesseinrichtung nach Anspruch 5, **dadurch gekennzeichnet, dass** die Laschen (102) zwischen einer Klemmstelle (16) und der Basis (101) jeweils eine wellenförmige Biegung aufweisen.

7. Winkelmesseinrichtung nach einem der Ansprüche 1 bis 4, **dadurch gekennzeichnet, dass** die Kupplung (20, 30, 40, 50) zwei diametral gegenüberliegende Laschen (202, 302, 402, 502), mit denen sie am Stator (6) befestigt ist und zwei um 90° dazu versetzte weitere diametral gegenüberliegende Laschen (204, 304, 404, 504) aufweist und zwischen diesen weiteren Laschen (204, 304, 404, 504) und dem stationären Objekt (9) die Klemmung erfolgt.

8. Winkelmesseinrichtung nach Anspruch 7, **dadurch gekennzeichnet, dass** die beiden weiteren Laschen (504) an einem Ring (51) befestigt sind, und dass an diesem Ring (51) Abschnitte (103) mit den Anschlagflächen (14) angebracht sind.

9. Winkelmesseinrichtung nach einem der vorhergehenden Ansprüche, **dadurch gekennzeichnet, dass** der Rotor (2) mit dem drehenden Objekt (8) mittels einer axial verlaufenden Schraube (18) verbunden ist, und dass die Einleitung der Klemmkraft durch die axiale Verstellung dieser Schraube (18) erfolgt.

10. Verfahren zur Montage eines Stators (6) mit einem um eine Drehachse (D) drehenden Rotor (2) einer Winkelmesseinrichtung (1) an ein stationäres Objekt (9) mit folgenden Verfahrensschritten:
a) Anbringen einer radial und/oder axial ausgleichenden Kupplung (10, 20, 30, 40, 50) an den Stator (6) der Winkelmesseinrichtung (1),
b) axiales Heranführen der Winkelmesseinrichtung (1) an das stationäre Objekt (9), wobei dabei eine quer zur Drehachse (D) verlaufende Anschlagfläche (14) der Kupplung (10, 20, 30, 40, 50) mit einer quer zur Drehachse (D) verlaufenden Anschlagfläche (15) des stationären Objektes (9) in Kontakt tritt und
c) die Anschlagfläche (14) der Kupplung (10, 20, 30, 40, 50) sich an der Anschlagfläche (15) des stationären Objektes (9) abstützt und sich beim weiteren Heranführen der Winkelmesseinrichtung (1) radial verlagert, bis eine Fläche (16, 21) der Kupplung (10, 20, 30, 40, 50) an einer weiteren Fläche (17, 19) des stationären Objektes (9) anstößt und die Kupplung (10, 20, 30, 40, 50) drehstarr klemmt.

## Claims

1. Angle measuring device (1) for measuring the angular position of a stationary object (9) with respect to an object which is rotatable around an axis of rotation (D), said device comprising
- a rotor (2) which may be connected to the rotatable object (8) so as to be rigid against torsion,
- a stator (6) having a scanning unit (7) for scanning a material measure (4) which is rotatable relative to the scanning unit (7),
- a coupler (10, 20, 30, 40, 50) to provide torsionally rigid yet radially and/or axially elastic seating for the stator (6) on the stationary object (9), the coupler (10, 20, 30, 40, 50) being capable of being fastened to the stationary object (9) and/or the stator (6) by clamping,
- the coupler (10, 20, 30, 40, 50) having contact faces (14) which extend transversely with respect to the axis of rotation (D) and which cooperate with contact faces (15) of the stationary object (9) and/or of the stator (6) which also extend transversely with respect to the axis of rotation (D), **characterised in that**
- the clamping force required for clamping is introduced by cooperation of the two contact faces (14, 15) by an axial pressure force being converted into a radial clamping force by means of which the coupler (10, 20, 30, 40, 50) can be spread radially with the stationary object (9) and/or the stator (6).

2. Angle measuring device according to claim 1, **characterised in that** the coupler (10, 20, 40, 50) is clamped against a circumferential face (17) of the stationary object (9).

3. Angle measuring device according to claim 2, **characterised in that** the coupler (20) has an area (103) which spreads radially against an inner face (19) and an outer face (17) of the stationary object (9).

4. Angle measuring device according to claim 1, **characterised in that** the coupler (30) has an area with which it spreads axially in a gap (22) of the stationary object (9).

5. Angle measuring device according to one of the preceding claims, **characterised in that** the coupler has a base (101) by which it is rigidly fastened to the stator (6) and on the base is formed a plurality of tongues (102) by means of which it is clamped to the stationary object (9).

6. Angle measuring device according to claim 5, **characterised in that** the tongues (102) each have a wave-shaped bend between a clamping site (16) and the base (101).

7. Angle measuring device according to one of claims 1 to 4, **characterised in that** the coupler (20, 30, 40, 50) has two diametrically opposite tongues (202, 302, 402, 502) by means of which it is fastened to the stator (6) and two additional diametrically opposite tongues (204, 304, 404, 504) which are offset by 90° with respect to the former and the clamping takes place between these additional tongues (204, 304, 404, 504) and the stationary object (9).

8. Angle measuring device according to claim 7, **characterised in that** the two additional tongues (504) are fastened to a ring (51) and **in that** sections (103) with the contact faces (14) are attached to this ring (51).

9. Angle measuring device according to one of the preceding claims, **characterised in that** the rotor (2) is connected to the rotating object (8) by means of an axially extending screw (18) and **in that** the clamping force is introduced by the axial adjustment of this screw (18).

10. Method for mounting a stator (6) which has a rotor (2) of an angle measuring device (1) rotating about an axis of rotation (D) on a stationary object (9), said method comprising the following steps:
a) attaching a radially and/or axially compensating coupler (10, 20, 30, 40, 50) to the stator (6) of the angle measuring device (1),
b) guiding the angle measuring device (1) axially to the stationary object (9), a contact face (14) of the coupler (10, 20, 30, 40, 50) extending transversely with respect to the axis of rotation (D) coming into contact with a contact face (15) of the stationary object (9) extending transversely with respect to the axis of rotation (D), and
c) the contact face (14) of the coupler (10, 20, 30, 40, 50) being supported on the contact face (15) of the stationary object (9) and being radially displaced as the angle measuring device (1) is brought closer until a face (16, 21) of the coupler (10, 20, 30, 40, 50) pushes against a further face (17, 19) of the stationary object (9) and clamps the coupler (10, 20, 30, 40, 50) in a torsionally rigid manner.

## Revendications

1. Dispositif de mesure d'angles (1) pour mesurer la position angulaire entre un objet stationnaire (9) et un objet pouvant tourner par rapport à celui-ci autour d'un axe de rotation (D), comprenant :
- un rotor (2) qui peut être relié à l'objet tournant (8) avec solidarité rigide en rotation,
- un stator (6) avec une unité d'exploration (7) pour explorer une échelle de mesure matérialisée (4) pouvant tourner par rapport à cette unité (7),
- un accouplement (10, 20, 30, 40, 50) pour assurer sur l'objet stationnaire (9) le montage du stator (6), rigidement solidaire en rotation, mais élastique radialement et/ou axialement, l'accouplement (10, 20, 30, 40, 50) pouvant être fixé par coincement sur l'objet stationnaire (9) et/ou sur le stator (6),
- l'accouplement (10, 20, 30, 40, 50) présente des portées de butée (14) qui sont perpendiculaires à l'axe de rotation (D) et qui coopèrent avec des portées de butée (15) également perpendiculaires à l'axe de rotation (D) et appartenant à l'objet stationnaire (9) et/ou au stator (6),
**caractérisé en ce que** la force nécessaire pour assurer le coincement est induite par la coopération des deux portées de butée (14, 15), une force de poussée axiale étant transformée en une force de coincement radiale par laquelle l'accouplement (10, 20, 30, 40, 50) peut s'expanser radialement avec l'objet stationnaire (9) et/ou le stator (6).

2. Dispositif de mesure d'angles selon la revendication 1, **caractérisé en ce que** l'accouplement (10, 20, 40, 50) se coince sur une portée périphérique (17) de l'objet stationnaire (9).

3. Dispositif de mesure d'angles selon la revendication 2, **caractérisé en ce que** l'accouplement (20) présente une zone (103) qui s'expanse radialement par rapport à une portée interne (19) et une portée externe (17) de l'objet stationnaire (9).

4. Dispositif de mesure d'angles selon la revendication 1, **caractérisé en ce que** l'accouplement (30) présente une zone par laquelle il s'expanse axialement dans une fente (22) de l'objet stationnaire (9).

5. Dispositif de mesure d'angles selon une des revendications précédentes, **caractérisé en ce que** l'accouplement (10) présente une base (101) par laquelle il est fixé rigidement sur le stator (6) et sur laquelle sont formées plusieurs pattes (102) par lesquelles il se coince sur l'objet stationnaire (9).

6. Dispositif de mesure d'angles selon la revendication 5, **caractérisé en ce que** les pattes (102) présentent chacune entre un point de coincement (16) et la base (101), un pliage en forme d'ondulation.

7. Dispositif de mesure d'angles selon une des revendications 1 à 4,
**caractérisé en ce que** l'accouplement (20, 30, 40, 50) présente deux pattes diamétralement opposées (202, 302, 402, 502) par lesquelles il est fixé au stator (6), ainsi que deux autres pattes (204, 304, 404, 504) diamétralement opposées et décalées de 90° par rapport aux premières, le coincement ayant lieu entre ces dernières pattes et l'objet stationnaire.

8. Dispositif de mesure d'angles selon la revendication 7, **caractérisé en ce que** les deux autres pattes (504) sont fixées à un anneau (51) présentant des sections (103) sur lesquelles sont montées des portées de butée (14).

9. Dispositif de mesure d'angles selon une des revendications précédentes, **caractérisé en ce que** le rotor (2) est relié à l'objet tournant (8) par l'intermédiaire d'une vis axiale (18), la force de coincement étant induite par déplacement axial de cette vis (18).

10. Procédé de montage sur un objet stationnaire (9) d'un stator (6) et d'un rotor (2) tournant autour d'un axe de rotation (10) et appartenant à un dispositif de mesure d'angles (1), ce procédé présentant les étapes suivantes :
a) montage sur le stator (6) du dispositif de mesure d'angles (1) d'un accouplement (10, 20, 30, 40, 50) assurant une compensation radiale et/ou axiale,
b) amenée axiale du dispositif de mesure d'angles (1) sur l'objet stationnaire (9) par mise en contact d'une portée de butée (14) perpendiculaire à l'axe de rotation (2) et appartenant à l'accouplement (10, 20, 30, 40, 50), avec une portée de butée (15), également perpendiculaire à l'axe de rotation (D) et appartenant à l'objet stationnaire (9),
c) la portée de butée (14) de l'accouplement (10, 20, 30, 40, 50) s'appuie sur la portée de butée (15) de l'objet stationnaire (9) et quand l'introduction du dispositif de mesure d'angles se poursuit, se déplace radialement jusqu'à ce qu'une portée (16, 21) de l'accouplement (10, 20, 30, 40, 50) rencontre une autre portée (17, 19) de l'objet stationnaire (9) et coince rigidement en rotation l'accouplement (10, 20, 30, 40, 50).
